(19) Europäisches Patentamt
European Patent Office
Office européen des brevets

(11) Veröffentlichungsnummer: **0 083 052**
**B1**

(12) # EUROPÄISCHE PATENTSCHRIFT

(45) Veröffentlichungstag der Patentschrift: **13.11.85**

(51) Int. Cl.⁴: **C 09 B 62/09**, D 06 P 3/66, D 06 P 3/10

(21) Anmeldenummer: **82111795.9**

(22) Anmeldetag: **20.12.82**

(54) **Bisazoreaktivfarbstoffe, Verfahren zu ihrer Herstellung und ihre Verwendung zum Färben und Bedrucken von hydroxylgruppen- oder stickstoffhaltigem Fasermaterial.**

(30) Priorität: **30.12.81 DE 3151959**

(43) Veröffentlichungstag der Anmeldung: **06.07.83 Patentblatt 83/27**

(45) Bekanntmachung des Hinweises auf die Patenterteilung: **13.11.85 Patentblatt 85/46**

(84) Benannte Vertragsstaaten: **CH DE FR GB LI**

(56) Entgegenhaltungen:
**FR - A - 2 429 244**

**CHEMICAL ABSTRACTS, Band 95, Nr. 22, November 1981, Seite 74, Nr. 188623u, Columbus, Ohio, USA ANON: "Cellulose reactive dyes"**

***Die Akte enthält technische Angaben, die nach dem Eingang der Anmeldung eingereicht wurden und die nicht in dieser Patentschrift enthalten sind.***

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen (DE)**
Erfinder: **Schellhammer, Carl-Wolfgang, Dr., Katharinental 26, D-5060 Bergisch-Gladbach (DE)**

**EP 0 083 052 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Reaktivfarbstoffe der Formel

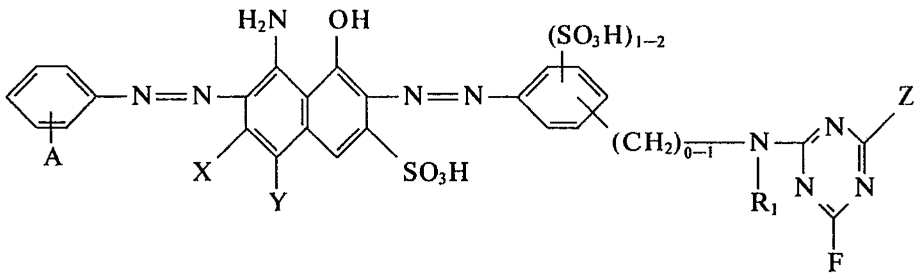

(1)

worin

A = ein Rest der Reihe Nitro,

$SO_2R_2$ 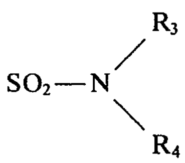 und Cl

wobei

$R_2$ = gegebenenfalls durch OH, $C_1$—$C_4$-Alkoxy, $OSO_3H$, $SO_3H$, Cl, CN, COOH, $C_2$—$C_6$-Alkenyl substituiertes $C_1$—$C_6$-Alkyl oder gegebenenfalls durch Sulfogruppen substituiertes Phenyl und wobei

$R_3$ und $R_4$ gleich oder verschieden sind und Wasserstoff, gegebenenfalls durch OH, $SO_3H$, Cl, CN, CooH, Alkoxy-($C_1$—$C_4$), Halogen substituiertes Alkyl ($C_1$—$C_6$) oder gegebenenfalls durch Sulfogruppen substituiertes Phenyl bedeuten oder worin

$R_3$ und $R_4$ zusammen mit dem durch sie eingeschlossenen Stickstoffatom, gegebenenfalls unter Einschluß eines weiteren Heteroatoms einen gesättigten 5- oder 6gliedrigen Ring bilden,

X und Y voneinander verschieden sind und für Wasserstoff oder die Sulfogruppe stehen,

$R_1$ = Wasserstoff oder Alkyl ($C_1$—$C_4$) und

Z = gegebenenfalls substituierte Aminogruppe.

Als Substituent Z kommt vorzugsweise die unten aufgeführte Gruppierung $NR_5R_6$ in Betracht sowie der Rest eines 6gliedrigen N-heterocyclischen Substituenten, der ein weiteres Heteroatom, wie Stickstoff, Sauerstoff und Schwefel, enthalten kann. (Einzelbeispiele: Z = Morpholino, Piperidino, Piperazino).

Bevorzugt sind Reaktivfarbstoffe der Formeln (1a) und (1b)

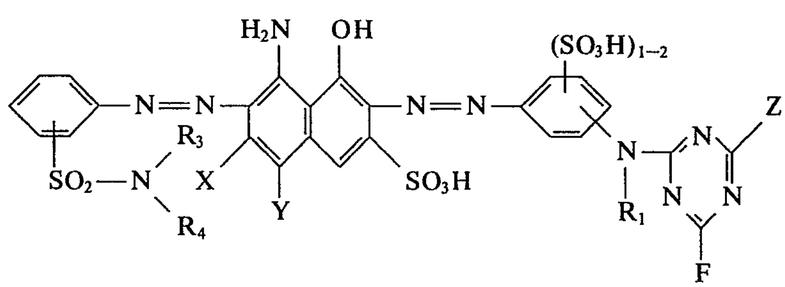

(1a)

worin $R_1$, $R_3$, $R_4$, X, Y und Z die oben angegebene Bedeutung besitzen,

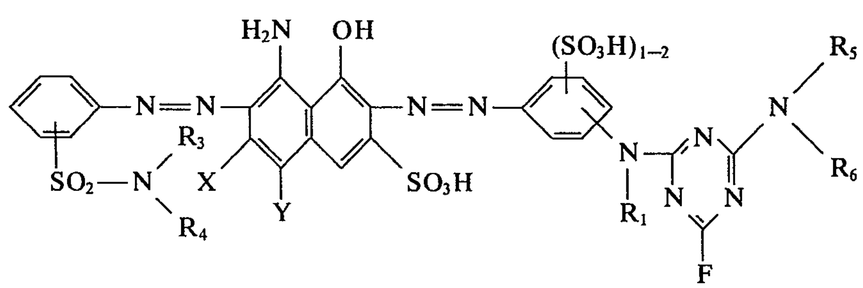

(1b)

worin

$R_1$, $R_3$, $R_4$,
X und Y die oben angegebene Bedeutung besitzen,
$R_5$ = Wasserstoff oder gegebenenfalls substituiertes Alkyl ($C_1$—$C_4$),
$R_6$ = Wasserstoff oder gegebenenfalls substituiertes Alkyl, Cycloalkyl, Aralkyl oder Aryl.

Falls $R_5$ ein Alkylrest ist kann dieser substituiert sein, z. B. durch Chlor, Hydroxy, Cyan, Methoxy, Carboxy und Sulfo. Als Beispiele für $R_2$ seien genannt: Methyl, Ethyl, Propyl, Isopropyl, Butyl, Isobutyl, sek.-Butyl, tert.-Butyl, β-Hydroxyethyl, β-Chlorethyl, β-Cyanethyl, Cyanmethyl, γ-Cyanpropyl, β-Methoxyethyl, β-Carboxylethyl, Sulfomethyl und β-Sulfoethyl. Für $R_6$ kommen z. B. in Betracht: Wasserstoff, die gleichen substituierten und unsubstituierten Alkylreste, die oben für $R_5$ genannt sind, Methoxypropyl, Ethoxyethyl, Ethoxypropyl und Methoxybutyl, Cyclohexyl, Benzyl, 4-Sulfobenzyl, 4-Methylbenzyl, Phenethyl und insbesondere Phenyl, das durch $C_{1-4}$-Alkyl, $C_{1-4}$-Alkoxy, Acetylamino, Ureido, Carboxy, Halogen, Sulfo, Sulfomethyl, Trifluormethyl, Sulfamoyl und Carbamoyl substituiert sein kann, oder Naphthyl, das durch Sulfo substituiert sein kann; ferner können $R_5$ und $R_6$ zu einem sechsgliedrigen N-heterocyclischen Ring geschlossen sein, der ein weiteres Heteroatom, wie Stickstoff, Sauerstoff und Schwefel, enthalten kann.

Als Beispiele für den Rest $-NR_5R_6$ in der Formel (1 b) seien genannt: $-NH_2$, Methylamino, Ethylamino, Propylamino, Isopropylamino, Butylamino, β-Methoxyethylamino, γ-Methoxypropylamino, N,N-Dimethylamino, N,N-Diethylamino, N-Methyl-N-phenylamino, N-Ethyl-N-phenylamino, β-Chlorethylamino, β-Hydroxyethylamino, γ-Hydroxypropylamino, Benzylamino, Cyclohexylamino, Phenylamino, Toluidino, Chloranilino, Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonapthyl-(1)-amino, N-Hydroxyethyl-N-phenylamino, Semicarbazid.

Bevorzugt sind Reaktivfarbstoffe der Formel

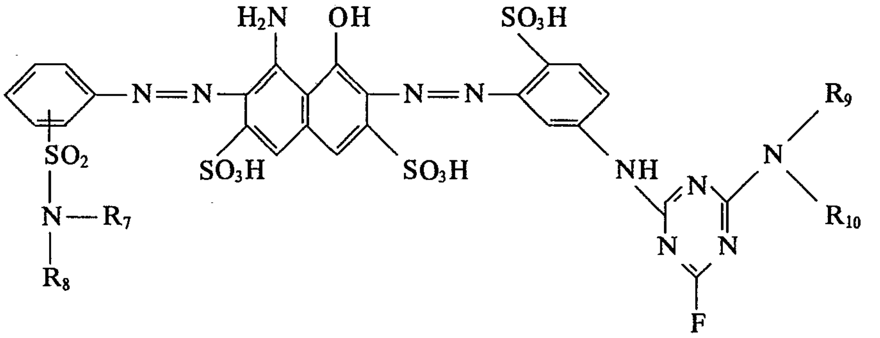

(2)

worin

$R_7$ und $R_8$ Wasserstoff, Methyl, Ethyl oder β-Hydroxyethyl;
$R_9$ Wasserstoff, Methyl, Ethyl oder Hydroxyethyl und
$R_{10}$ Wasserstoff oder Phenyl, das durch Methyl, Methoxy, Chlor und Sulfo substituiert sein kann,
ist.

Wertvolle Reaktivfarbstoffe der durch Formel (2) definierten Klasse sind Farbstoffe der Formel

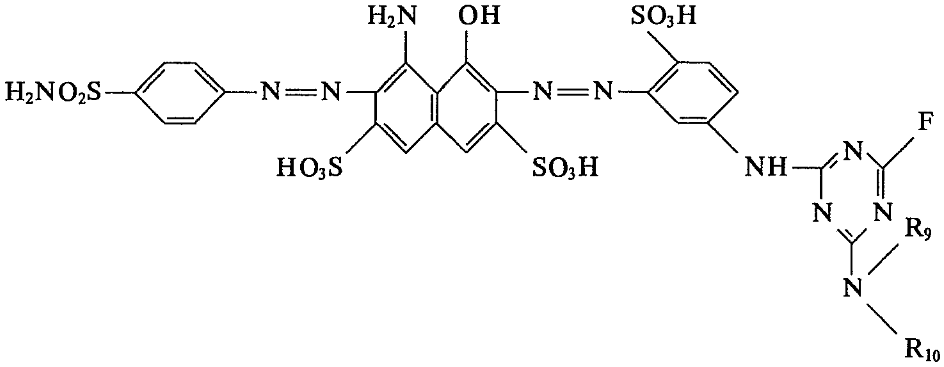

(2a)

Bevorzugt sind Reaktivfarbstoffe der Formel (2b) und (2c)

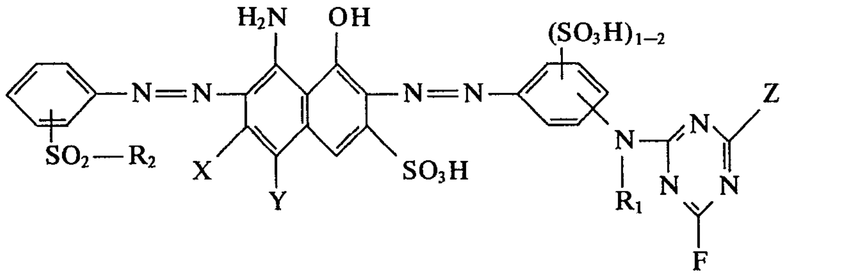

(2b)

worin $R_1$, $R_2$, X, Y und Z die oben angegebene Bedeutung besitzen,

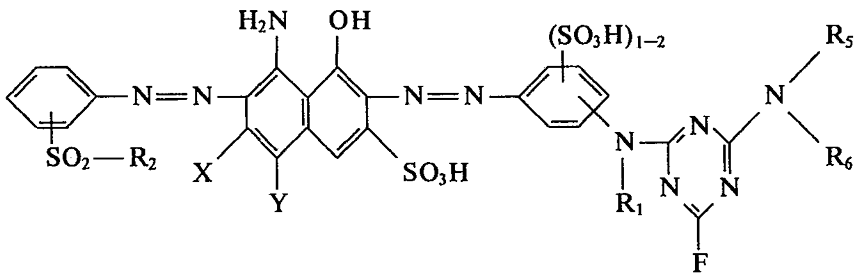

(2c)

worin $R_1$, $R_2$, $R_5$, $R_6$, X und Y die oben angegebene Bedeutung besitzen.

Wertvolle Reaktivfarbstoffe der durch Formel (2b) definierten Klasse sind Farbstoffe der Formel

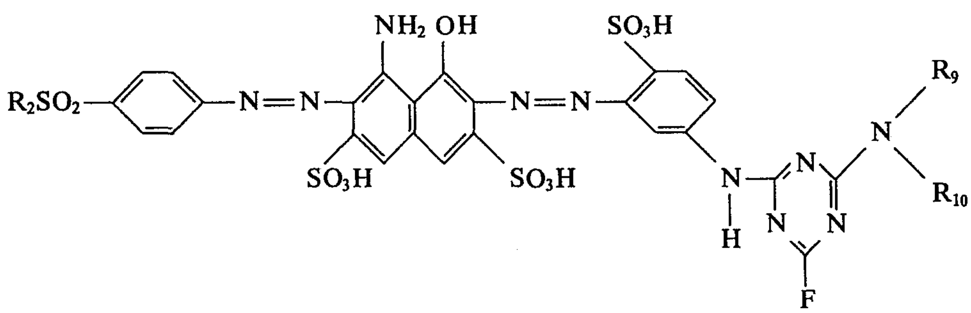

worin $R_2$, $R_9$ und $R_{10}$ die oben angegebene Bedeutung haben.

Die Reaktivfarbstoffe der Formel (1) werden hergestellt, indem man eine Kupplungskomponente der Formel

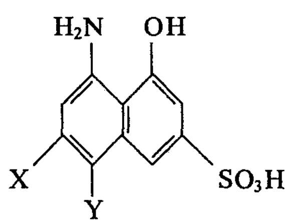

(3)

worin X und Y die oben angegebene Bedeutung besitzen,

eine Diazokomponente der Formel

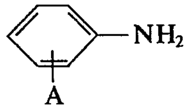

(4)

worin A die obige Bedeutung besitzt,

eine weitere Diazokomponente der Formel

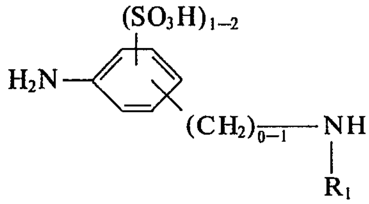

(5)

2,4,6-Trifluor-s-triazin

und eine Aminoverbindung der Formel

H—Z (6)

in beliebiger Folge diazotiert, kuppelt und kondensiert.

Die bevorzugten Reaktivfarbstoffe der Formel

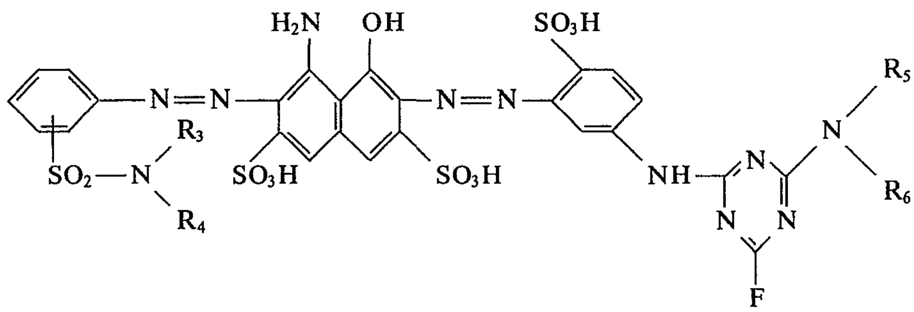

(7)

werden erhalten, indem man eine Diazokomponente der Formel

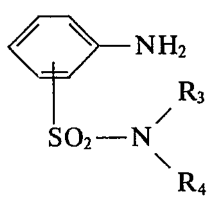

(4a)

worin $R_3$ und $R_4$ die angegebene Bedeutung haben,

1-Amino-8-hydroxynaphthalin-3,6-disulfonsäure, 1,3-Diaminobenzol-4-sulfonsäure, Cyanurfluorid und eine Aminoverbindung der Formel

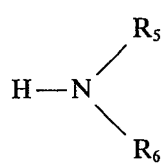

(6a)

worin $R_5$ und $R_6$ die angegebenen Bedeutungen haben, in beliebiger Folge diazotiert, kuppelt und kondensiert.

Da die einzelnen oben angegebenen Verfahrensschritte, nämlich Diazotierung, Kupplung und Kondensation in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten der Formel (3) bis (6) frei gewählt werden kann.

Wichtige Verfahrensvarianten sind dadurch gekennzeichnet, daß man

1. eine Kupplungskomponente der Formel (3) mit diazotierten Diazokomponenten der Formeln (4) und (5) zu einer Disazoverbindung umsetzt, diese mit 2,4,6-Trifluor-s-triazin kondensiert und das primäre Kondensationsprodukt mit einer Aminoverbindung der Formel (6) kondensiert.
   Die beiden letzten Reaktionsschritte können auch in anderer Reihenfolge ausgeführt werden,

indem man das 2,4,6-Trifluor-s-triazin zuerst mit einer Aminoverbindung der Formel (6) kondensiert und das erhaltene primäre Kondensationsprodukt mit der obengenannten Disazoverbindung kondensiert.

Bei der Herstellung der obengenannten Disazoverbindung geht man zweckmäßigerweise so vor, daß man zuerst eine diazotierte Diazokomponente der Formel (4) mit einer Kupplungskomponente der Formel (3) kuppelt und die erhaltene Monoazoverbindung anschließend mit einer diazotierten Diazokomponente der Formel (5) kuppelt.

2. eine Diazokomponente der Formel (4) diazotiert und auf eine Kupplungskomponente der Formel (3) kuppelt, daß man ferner 2,4,6-Trifluor-s-triazin mit einer Aminoverbindung der Formel (6) kondensiert, das primäre Kondensationsprodukt mit einer Diazokomponente der Formel (5) kondensiert, das erhaltene sekundäre Kondensationsprodukt diazotiert und auf die anfangs hergestellte Monoazoverbindung kuppelt.

Die bevorzugte Herstellungsweise des Reaktivfarbstoffs der Formel (2a) ist dadurch gekennzeichnet, daß man 4-Aminobenzolsulfonamid und 1,3-Phenylendiamin-4-sulfonsäure diazotiert und auf 1-Amino-8-hydroxynaphthalin-3,6-disulfonsäure kuppelt, die erhaltene Zwischenverbindung der Formel

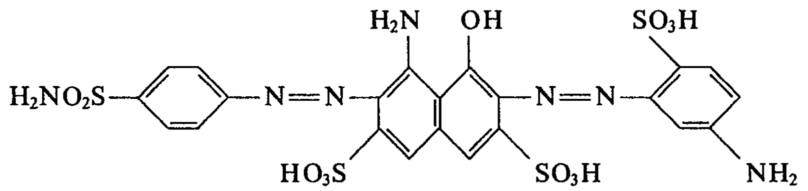

(8)

mit 2,4,6-Trifluor-s-triazin kondensiert und das primäre Kondensationsprodukt mit Aminen der Formel

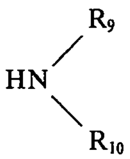

(9)

worin $R_9$ und $R_{10}$ die bei Formel (2) angegebene Bedeutung haben, kondensiert.

Die Diazotierung der Diazokomponenten erfolgt in der Regel durch Einwirkung salpetriger Säure in wäßrig-mineralsaurer Lösung bei tiefer Temperatur.

Die Kupplung der Diazokomponenten der Formel (4) auf die Kupplungskomponente der Formel (3) in ortho-Stellung zur $H_2N$-Gruppe erfolgt in stark saurer Lösung, bei pH-Werten von 1 bis 2; die Kupplung der Diazokomponenten der Formel (5) auf die Kupplungskomponente der Formel (3) in ortho-Stellung zur HO-Gruppe in schwach saurem, neutralem bis schwach alkalischem Bereich, bei pH-Werten zwischen 6,5 und 8.

Im allgemeinen ist es erforderlich, die Kupplung in saurer Lösung zuerst auszuführen. In manchen Fällen verwendet man zweckmäßigerweise für die Kupplungen, bei welchen eine Diaminobenzolsulfonsäure als Diazokomponente der Formel (5) verwendet wird, nicht diese selbst, sondern statt dessen eine Amino-acylamino-benzolsulfonsäure, z. B. die 5-Acetylaminoanilin-2-sulfonsäure, aus der man nach vollzogener Kupplung die Acetylgruppe durch Verseifung abspaltet, bevor man weiterkondensiert. Ferner kann man als Diazokomponente der Formel (5) auch eine Nitro-aminoverbindung, z. B. 5-Nitroanilin-2-sulfonsäure, verwenden und die Nitrogruppe nach der Kupplung mit Schwefelnatrium oder Natriumsulfhydrat zur Aminogruppe reduzieren.

Die Kondensation des 2,4,6-Trifluor-s-triazins mit den Diazokomponenten der Formel (5) und den Aminoverbindungen der Formel (6) erfolgen vorzugsweise in wäßriger Lösung oder Suspension, bei niedriger Temperatur und bei schwach saurem, neutralem bis schwach alkalischem pH-Wert, so daß im fertigen Reaktivfarbstoff der Formel (1) noch mindestens ein Fluoratom als abspaltbarer Rest übrig bleibt. Vorteilhaft wird der bei der Kondensation freiwerdende Fluorwasserstoff laufend durch Zugabe wäßriger Alkalihydroxide, -carbonate oder -bicarbonate neutralisiert.

Die Herstellung der Diazozwischenverbindungen ist in den nachfolgenden Ausführungsbeispielen nicht in allen Fällen beschrieben, sie ergibt sich jedoch ohne weiteres aus dem oben Gesagten.

Als Ausgangsverbindungen zur Herstellung der Reaktivfarbstoffe der Formel (1) können beispielsweise genannt werden:

Kupplungskomponenten der Formel (3)

1-Amino-8-hydroxynaphthalin-3,6-disulfonsäure (H-Säure), 1-Amino-8-hydroxynaphthalin-4,6-disulfonsäure (K-Säure).

b) Diazokomponenten der Formel (4)

2-, 3- oder 4-Aminobenzolsulfonamid oder -sulfomonoethyl- oder -ethylamide oder -sulfodimethyl- oder -sulfondiethylamide, 3-Nitroanilin, 4-Nitroanilin, 4-Methylsulfonylanilin, 4-Ethylsulfonylanilin, 4-Aminobenzolsulfomono-β-hydroxyethylamid oder Sulfodi-β-hydroxyethylamid, 4-β-Hydroxyethylsulfonyl-anilin, 3-Allylsulfonylanilin, 4-(Propenyl-1')-sulfonylanilin, 4-(β-Hydroxy-γ-chlorpropyl)-sulfonylanilin, 4-(3'-Hydroxypropenyl-1')-sulfonylanilin, 4-(β-Sulfopropyl)-sulfonylanilin, 4-(β-sulfo-γ-hydroxypropyl)-sulfonylanilin, 4-Allylsulfonylanilin, 4-Butylsulfonyl-anilin, 4-Chloranilin, 3-Chloranilin.

c) Diazokomponenten der Formel (5)

1,3-Diaminobenzol-4-sulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4,6-disulfonsäure, 3-Amino-benzyl-N-methylamin, 4-Amino-benzyl-N-methylamin, 3-Amino-4-sulfobenzyl-N-methylamin.

d) 2,4,6-Trifluor-s-triazin (Cyanurfluorid)

e) Aminoverbindungen der Formel (6)

Ammoniak, Methylamin, Dimethylamin, Ethylamin, Diethylamin, Propylamin, Isopropylamin, Butylamin, Dibutylamin, Isobutylamin, sek.-Butylamin, tert.-Butylamin, Hexylamin, Methoxyethylamin, Ethoxyethylamin, Methoxypropylamin, Chlorethylamin, Hydroxyethylamin, Dihydroxyethylamin, Hydroxypropylamin, Aminoethansulfonsäure, β-Sulfatoethylamin, Benzylamin, Cyclohexylamin, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Ethalanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-4-methylanilin, 3-Nitro-4-methylanilin, o-, m- und p-Anisidin, Semicarbazid, o-, m- und p-Phenetidin, 2-Methoxy-5-methylanilin, 2-Ethoxy-5-methoxyanilin, 4-Bromanilin, 4-Aminophenylsulfamid, 3-Trifluormethylanilin, 3-, und 4-Aminophenylharnstoff, 1-Naphthylamin, 2-Naphthylamin, 2-Amino-1-hydroxy-naphthalin, 1-Amino-4-hydroxy-naphthalin, 1-Amino-8-hydroxy-naphthalin, 1-Amino-2-hydroxy-naphthalin, 1-Amino-7-hydroxy-naphthalin, Orthanilsäure, Metanilsäure, Sulfanilsäure, Anilin-2,4-di-sulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, -3-, -4-, -5-, -6-, -7- und -8-sulfonsäure, Aminoessigsäure, 3-Methylamino-propionitril, 3-Aminopropionitril, Amino-acetonitril, Aminoacetamid, 3-Amino-propionsäureamid, Aminoessigester, 2-Naphthylamin-1-, -3-, -4-, -5-, -6-, -7- und -8- sulfonsäure, 1-Naphthylamin-2,4-, -2,5-, -2,7-, -2,8-, -3,5-, -3,6-, -3,7-, -3,8-, -4,6-, -4,7-, -4,8-, und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin und Piperazin, N-β-Hydroxyethylanilin, Semicarbazid.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe von eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Reaktivfarbstoffe der Formel (1) sind neu. Sie zeichnen sich durch hohe Reaktivität aus, und sie ergeben Färbungen mit guten Naß- und Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen. Die Färbungen sind ätzbar.

Die Reaktivfarbstoffe der Formel (1) eignen sich zum Färben und Bedrucken der verschiedensten

Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die angegebenen Formeln der Farbstoffe sind die der entsprechenden freien Säuren. Die Farbstoffe werden im allgemeinen in Form der Alkalisalze, insbesondere der Na-, K- und Li-Salze isoliert und zum Färben eingesetzt.

Die Temperaturen sind in Celsiusgraden angegeben. Weiterhin werden dort die Farbtöne der hergestellten Farbstoffe nach Color-Index Hue Indication Chart No jeweils in runder Klammer angegeben.

Die konstitutionell nächstliegenden Farbstoffe sind aus Chemical Abstracts No. 188623u, 22. 11. 1981, bekannt.

## Beispiel 1

Eine neutrale Lösung von 70,1 g des Disazofarbstoffs der Formel

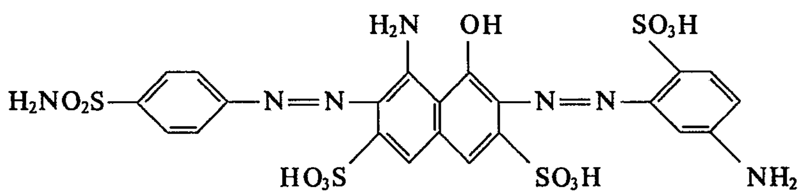

in 500 ml Wasser wird durch Zugabe von 300 g Eis auf 0 bis 5°C abgekühlt. Im Laufe von 5 bis 10 Minuten läßt man unter kräftigem Rühren 10 g Cyanurfluorid zulaufen und hält gleichzeitig das pH des Reaktionsgemisches durch Zutropfen von 2-n Natriumhydroxidlösung zwischen 6 und 7. Nach vollständiger Acylierung gibt man zur Lösung des Difluortriazinfarbstoffes 10,7 g o-Toluidin, erwärmt auf 30 bis 35°C und hält das pH des Reaktionsgemisches durch Zutropfen von 2-n Natriumhydroxidlösung zwischen 7 und 8. Nach vollständiger Umsetzung versetzt man die Lösung des Monofluortriazinfarbstoffes mit 5 g Dinatriumhydrogenphosphat und dampft die Lösung im Rotationsverdampfer bei 40 bis 45°C zur Trockne ein.

Der so erhaltene Farbstoff färbt Baumwolle in marineblauen Tönen (CI-Wert No 28).

Ähnliche Farbstoffe, die Baumwolle ebenfalls in marineblauen Tönen färben, werden erhalten, wenn nach den Angaben des obigen Beispiels anstelle von o-Toluidin äquivalente Mengen der unten aufgeführten Amine verwendet werden.

| Beispiel | Amine (Hue-Wert No des Farbstoffs) |
|---|---|
| 2 | 5-Amino-2-chlor-benzolsulfonsäure (28) |
| 3 | p-Sulfanilsäure (28) |
| 4 | 4-Amino-1-methoxy-benzol-2-sulfonsäure (28) |
| 5 | 4-Aminophenol-6-sulfonsäure (28) |
| 6 | 4-Aminotoluol-2-sulfonsäure (28) |
| 7 | Ethanolamin (28) |
| 8 | Anilin (28) |
| 9 | N-Methylanilin (28) |
| 10 | N-Ethylanilin (28) |

Fortsetzung

| Beispiel | Amine (Hue-Wert No des Farbstoffs) |
|---|---|
| 11 | m-Chloranilin (28) |
| 12 | p-Chloranilin (28) |
| 13 | Acetyl-m-phenylendiamin (28) |
| 14 | 2-Aminonaphthalin-4,8-disulfonsäure (28) |
| 15 | o-Anisidin (28) |
| 16 | p-Anisidin (28) |
| 17 | Anilin-3,5-disulfonsäure (28) |
| 18 | 3-Aminophenyl-harnstoff (28) |
| 19 | p-Aminobenzoesäure (28) |
| 20 | Methanilsäure (28) |
| 21 | 2-Aminonaphthalin-6-sulfonsäure (28) |
| 22 | Ammoniak (28) |
| 23 | 2-Aminophenol-4-sulfonsäure (28) |
| 24 | 4-Ethoxyanilin (28) |
| 25 | Morpholin (28) |
| 26 | Taurin (28) |
| 27 | Semicarbazid (28) |
| 28 | N-β-Hydroxyethylanilin (28) |

Weitere Farbstoffe, die Baumwolle in den in Kolonne III angeführten Nuancen färben, werden erhalten, wenn die aminogruppenhaltigen Disazofarbstoffe der Kolonne I mit Cyanurfluorid und den Aminen der Kolonne II umgesetzt werden. Auch hier wird wiederum der CI-Hue Indication Chart No-Wert in runder Klammer jeweils angegeben.

| I | II | III |
|---|---|---|
| 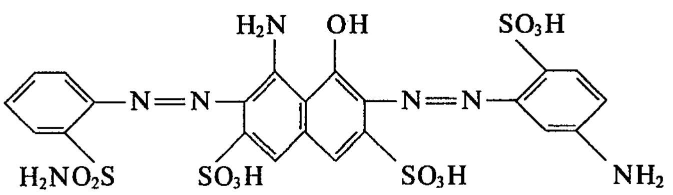 | N-Methyl-anilin | marine-blau (28) |

Fortsetzung

| I | II | III |
|---|---|---|
| 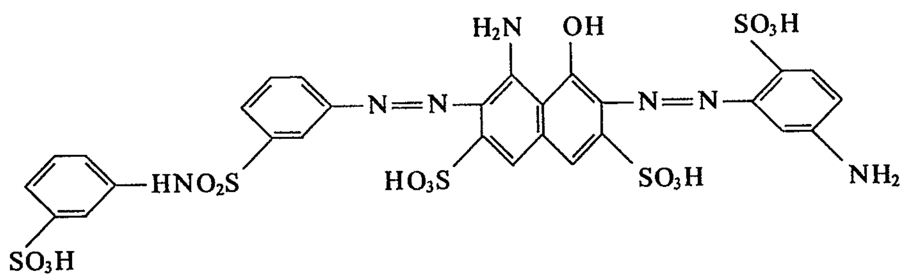 | N-Methyl-anilin | marine-blau (28) |
| 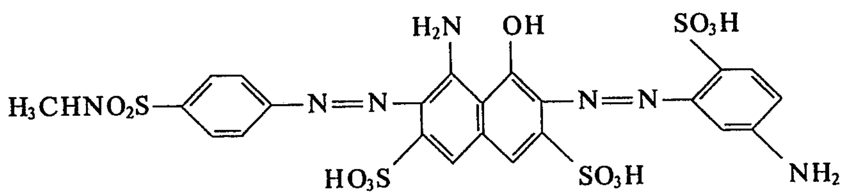 | Ammoniak | marine-blau (28) |
| 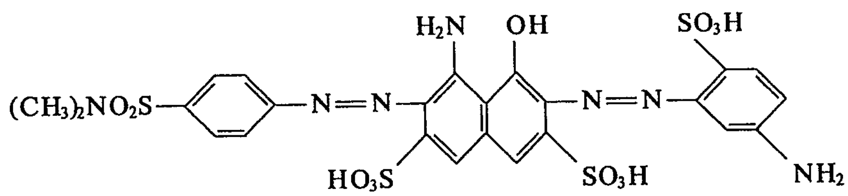 | Anilin-3-sulfon-säure | marine-blau (28) |
| 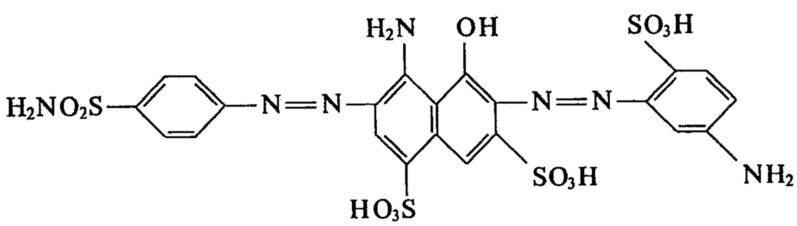 | Ammoniak | rot-stichig blau (38) |
| 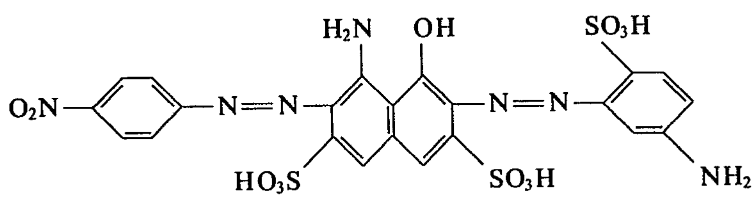 | N-Methyl-anilin | grün-stichig blau (39) |
| 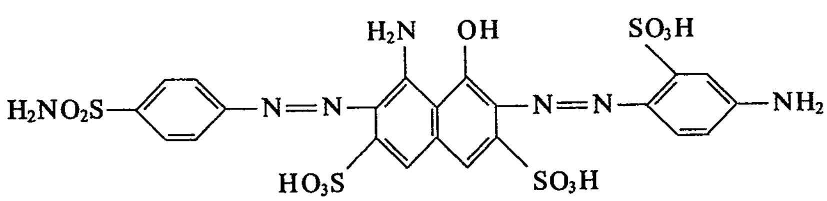 | N-Methyl-anilin | blau-grün (40) |
| 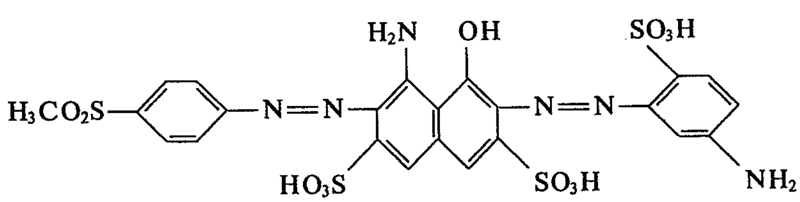 | N-Methyl-anilin | marine-blau (28) |

Fortsetzung

| I | II | III |
|---|---|---|
| 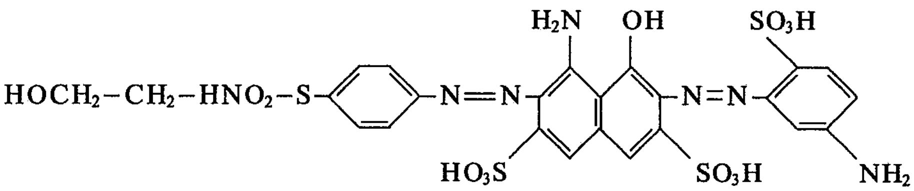 | 3-Amino-toluol | marine-blau (28) |
| 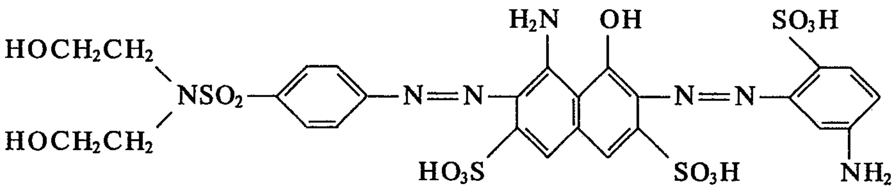 | Metanil-säure | marine-blau (28) |
| 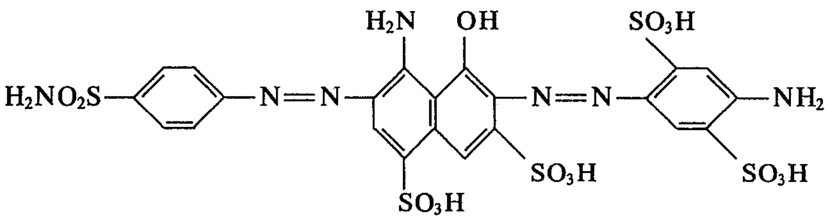 | Ammoniak | blau (38) |

Beispiel 29

Eine neutrale Lösung von 17,3 g Orthanilsäure in 200 ml Wasser wird durch Zugabe von 250 g Eis auf 0°C abgekühlt. Unter kräftigem Rühren läßt man im Laufe von 10 Minuten 9 g Cyanurfluorid zufließen und hält durch Zutropfen von 2-n Natriumhydroxidlösung das pH zwischen 6 und 7. Wenn keine unveränderte Orthanilsäure mehr nachweisbar ist, versetzt man die Lösung des primären Kondensationsproduktes mit einer neutralen Lösung von 18,8 g m-Phenylendiaminsulfonsäure in 50 ml Wasser, läßt die Temperatur auf 20 bis 25°C ansteigen und hält das pH des Reaktionsgemisches zwischen 6,5 und 7,0. Nach vollständiger Umsetzung wird das sekundäre Kondensationsprodukt durch Zugabe von 15 Vol.-% Kaliumchlorid ausgesalzen und abfiltriert.

Eine neutrale Aufschlämmung von 45,6 g des oben beschriebenen sekundären Kondensationsproduktes in 150 ml Wasser wird mit 25 g 4-n-Natriumnitritlösung versetzt und mit Eis auf 0 bis 5°C abgekühlt. Man gibt 30 g 10-n Salzsäure hinzu und zerstört nach einigen Stunden das überschüssige Nitrit mit Sulfaminsäure.

Die so erhaltene gelbe Aufschlämmung der Diazoverbindung gießt man hierauf zu einer eiskalten neutralen Lösung von 50,2 g des Farbstoffs 4-Aminobenzolsulfonamid sauer H-Säure in 150 ml Wasser, die vor der Kupplung noch mit 30 g Natriumbicarbonat versetzt wurde.

Es entsteht eine klare Lösung (Vol. ca. 750 ml), aus welcher der gebildete Farbstoff durch Zugabe von 10 Vol.-% einer Mischung von Kochsalz und Kaliumchlorid im Verhältnis 1 : 1 ausgesalzen wird. Nach dem Filtrieren wird die Farbstoffpaste mit einer konzentrierten wäßrigen Lösung von 5 g Dinatriumhydrogenphosphat vermischt und im Vakuum bei 50°C getrocknet.

Der so erhaltene Farbstoff färbt Baumwolle in marineblauen Tönen (CI-Hue-Indication Chart No 28).

Beispiel 30

Zu einer eiskalten, neutralen Lösung von 17,3 g Orthanilsäure in 400 ml Wasser werden im Laufe von ca. 10 Minuten 10 g Cyanurfluorid eingetropft, wobei durch gleichzeitige Zugabe von 1-n Natriumhydroxidlösung der pH-Wert des Reaktionsgemisches zwischen 6 und 7 gehalten wird.

Das so erhaltene primäre Kondensationsprodukt gießt man hierauf zu einer neutralen Lösung von 70,1 g des Disazofarbstoffes der Formel

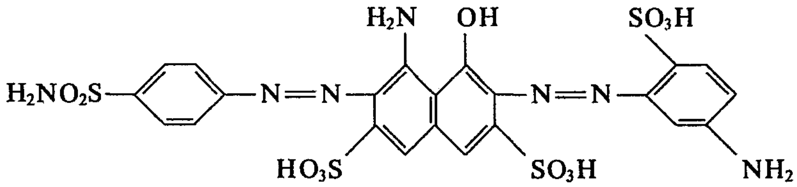

in 500 ml Wasser, erwärmt auf 30 bis 35°C und hält den pH-Wert des Reaktionsgemisches durch Zutropfen von 1-n Natriumhydroxidlösung zwischen 7 und 8.

Nach vollständiger Acylierung versetzt man die Lösung des Monofluortriazinfarbstoffes mit 5 g Dinatriumhydrogenphosphat und dampft die Lösung im Rotationsverdampfer bei 40 bis 45°C zur Trockne ein. Der so erhaltene Farbstoff färbt Baumwolle in marineblauen Tönen (No 28).

Verwendet man anstelle von Orthanilsäure 18,72 g 4-Aminotoluol-3-sulfonsäure und verfährt im übrigen nach den Angaben des obigen Beispiels, so erhält man einen Farbstoff, der Baumwolle ebenfalls in marineblauen Tönen (No 28) färbt.

Beispiel 31

Eine neutrale Lösung von 70 g des Disazofarbstoffs der Formel

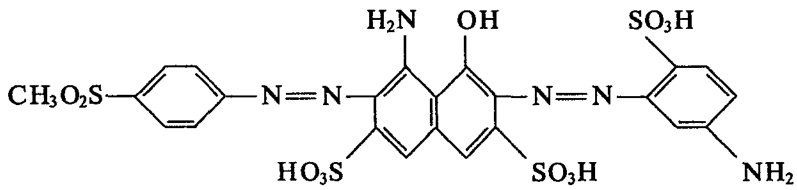

in 500 ml Wasser wird durch Zugabe von 300 g Eis auf 0 bis 5°C abgekühlt. Im Laufe von 5 bis 10 Minuten läßt man unter kräftigem Rühren 10 g Cyanurfluorid zulaufen und hält gleichzeitig das pH des Reaktionsgemisches durch Zutropfen von 2-n Natriumhydroxidlösung zwischen 6 und 7. Nach vollständiger Acylierung gibt man zur Lösung des Difluortriazinfarbstoffes 10,7 g o-Toluidin, erwärmt auf 30 bis 35°C und hält das pH des Reaktionsgemisches durch Zutropfen von 2-n Natriumhydroxidlösung zwischen 7 und 8. Nach vollständiger Umsetzung versetzt man die Lösung des Monofluortriazinfarbstoffes mit 5 g Dinatriumhydrogenphosphat und dampft die Lösung im Rotationsverdampfer bei 40 bis 45°C zur Trockne ein.

Der so erhaltene Farbstoff färbt Baumwolle in marineblauen Tönen (Cl-Wert No 28).

Ähnliche Farbstoffe, die Baumwolle ebenfalls in marineblauen Tönen färben, werden erhalten, wenn nach den Angaben des obigen Beispiels anstelle von o-Toluidin äquivalente Mengen der unten aufgeführten Amine verwendet werden.

| Beispiel | Amine (Hue-Wert No des Farbstoffs) |
|---|---|
| 32 | 5-Amino-2-chlor-benzolsulfonsäure (28) |
| 33 | p-Sulfanilsäure (28) |
| 34 | 4-Amino-1-methoxy-benzol-2-sulfonsäure (28) |
| 35 | 4-Aminophenol-6-sulfonsäure (28) |
| 36 | 4-Aminotoluol-2-sulfonsäure (28) |
| 37 | Ethanolamin (28) |
| 38 | Anilin (28) |
| 39 | N-Methylanilin (28) |
| 40 | N-Ethylanilin (28) |
| 41 | m-Chloranilin (28) |

Fortsetzung

| Beispiel | Amine (Hue-Wert No des Farbstoffs) |
|---|---|
| 42 | p-Chloranilin (28) |
| 43 | Acetyl-m-phenylendiamin (28) |
| 44 | 2-Aminonaphthalin-4,8-disulfonsäure (28) |
| 45 | o-Anisidin (28) |
| 46 | p-Anisidin (28) |
| 47 | Anilin-3,5-disulfonsäure (28) |
| 48 | 3-Aminophenyl-harnstoff (28) |
| 49 | p-Aminobenzoesäure (28) |
| 50 | Methanilsäure (28) |
| 51 | 2-Aminonaphthalin-6-sulfonsäure (28) |
| 52 | Ammoniak (28) |
| 53 | 2-Aminophenol-4-sulfonsäure (28) |
| 54 | 4-Ethoxyanilin (28) |
| 55 | Morpholin (28) |
| 56 | Taurin (28) |
| 57 | Semicarbazid (28) |
| 58 | N-$\beta$-Hydroxyethylanilin (28) |

Weitere Farbstoffe, die Baumwolle in den in Kolonne II angeführten Nuancen färben, werden erhalten, wenn die aminogruppenhaltigen Disazofarbstoffe der Kolonne I mit Cyanurfluorid und den Aminen der Beispiele 2 bis 28, die im Anschluß an Beispiel 1 aufgeführt werden, umgesetzt werden. Auch hier wird wiederum der CI-Hue Indication Chart No-Wert in runder Klammer jeweils angegeben.

| I | II |
|---|---|
| 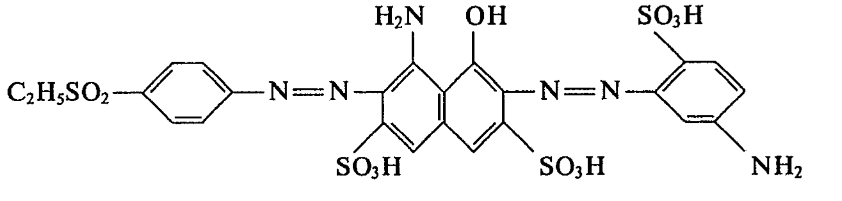 | marineblau (28) |
| 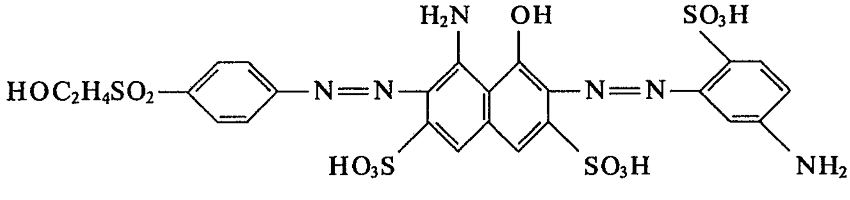 | marineblau (28) |

Fortsetzung

| I | II |
|---|---|
| 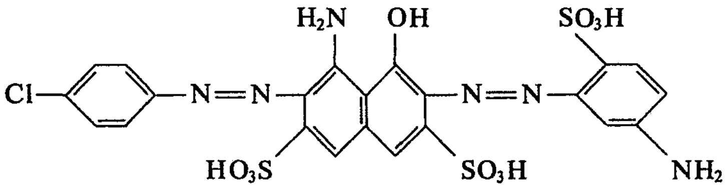 | marineblau (28) |
| 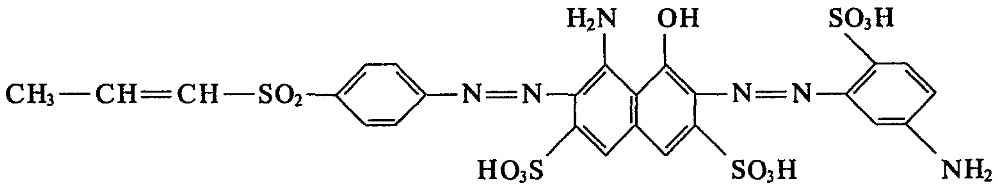 | marineblau (28) |
| 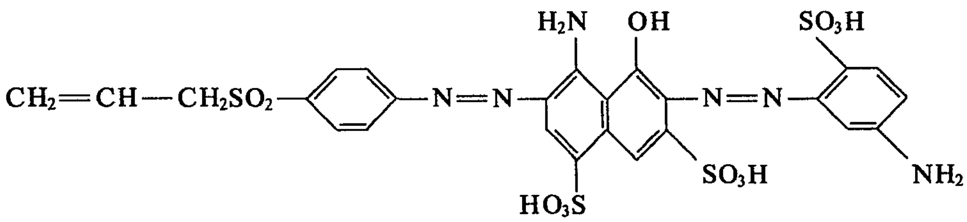 | rotstichig blau (28) |

Färbevorschrift I

2 Teile des gemäß Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so daß es um 75% seines Gewichtes zunimmt, und dann getrocknet.

Danach imprägniert man das Gewebe mit einer 20° warmen Lösung, die pro Liter 5 Gramm Natriumhydroxid und 300 Gramm Natriumchlorid enthält, quetscht auf 75% Gewichtszunahme ab, dämpft die Färbung während 30 Sekunden bei 100 bis 101°, spült, seift während einer Viertelstunde in einer 0,3%igen kochenden Lösung eines ionenfreien Waschmittels, spült und trocknet.

Färbevorschrift II

2 Teile des gemäß Beispiel 1 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°, wobei nach 30 Minuten 4 Vol.-Teile 30%ige Natronlauge, 10 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3%igen kochenden Lösung eines ionenfreien Waschmittels, spült und trocknet.

**Patentansprüche**

1. Reaktivfarbstoffe der Formel

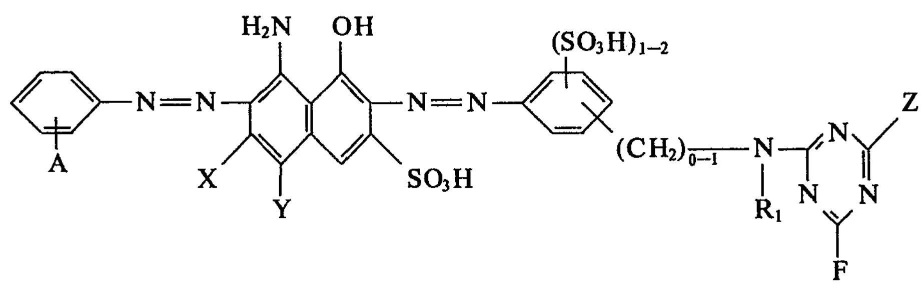

(1)

worin

A = ein Rest der Reihe Nitro,

$SO_2R_2$ 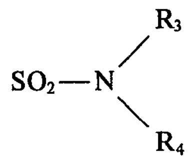 und Cl

wobei

$R_2$ = gegebenenfalls durch OH, $(C_1-C_4)$-Alkoxy, $SO_3H$, $OSO_3H$, Cl, CN, COOH, $C_2-C_6$-Alkenyl substituiertes $(C_1-C_6)$-Alkyl oder gegebenenfalls durch Sulfogruppen substituiertes Phenyl und wobei

$R_3$ und $R_4$ gleich und/oder verschieden sind und für Wasserstoff, gegebenenfalls durch OH, $SO_3H$, Cl, CN, COOH, Alkoxy$(C_1-C_4)$, Halogen substituiertes Alkyl$(C_1-C_6)$ oder gegebenenfalls durch Sulfogruppen substituiertes Phenyl stehen oder worin

$R_3$ und $R_4$ zusammen mit dem durch sie eingeschlossenen Stickstoffatom, gegebenenfalls unter Einschluß eines weiteren Heteroatoms einen gesättigten 5- oder 6gliedrigen Ring bilden,

X und Y voneinander verschieden sind und für Wasserstoff oder die Sulfogruppe stehen,

$R_1$ = Wasserstoff oder Alkyl $(C_1-C_4)$ und

Z = gegebenenfalls substituierte Aminogruppe.

2. Reaktivfarbstoffe der Formel

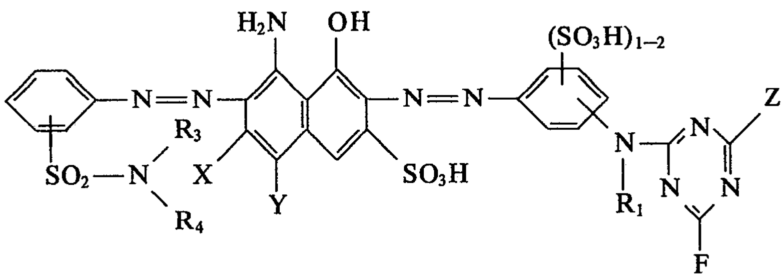

(1a)

worin $R_1$, $R_3$, $R_4$, X, Y und Z die in Anspruch 1 angegebene Bedeutung besitzen,

3. Reaktivfarbstoffe der Formel

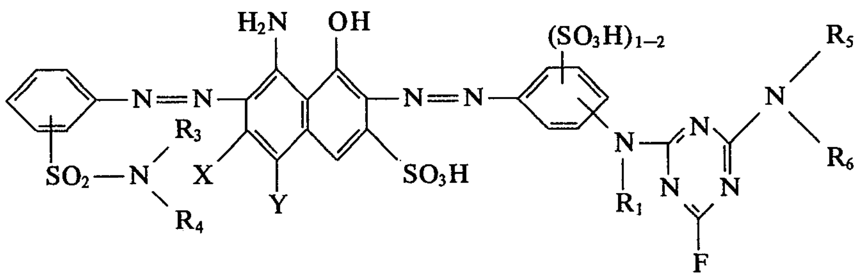

(1b)

worin

$R_1$, $R_3$, $R_4$,
X und Y die in Anspruch 1 angegebene Bedeutung besitzen,
$R_5$ = Wasserstoff oder gegebenenfalls substituiertes Alkyl $(C_1-C_4)$,
$R_6$ = Wasserstoff oder gegebenenfalls substituiertes Alkyl, Cycloalkyl, Aralkyl oder Aryl.

4. Reaktivfarbstoffe der Formel

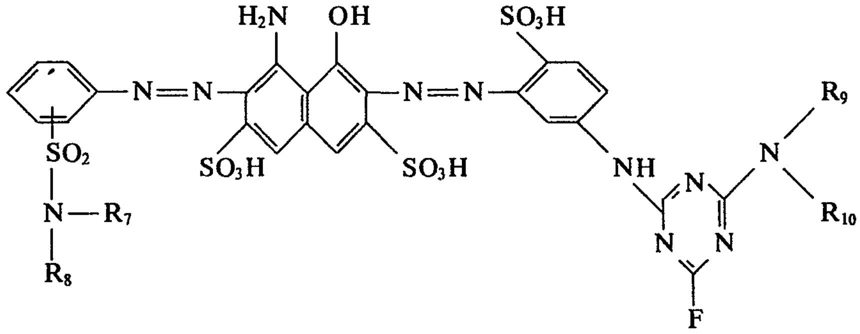

(2)

worin

$R_7$ und $R_8$ gleich oder verschieden sind und für Wasserstoff, Methyl, Ethyl oder $\beta$-Hydroxyethyl stehen,
$R_9$ = Wasserstoff, Methyl, Ethyl oder Hydroxyethyl und
$R_{10}$ = Wasserstoff oder gegebenenfalls durch Methyl, Methoxy, Chlor und $SO_3H$ substituiertes Phenyl.

5. Reaktivfarbstoffe der Formel

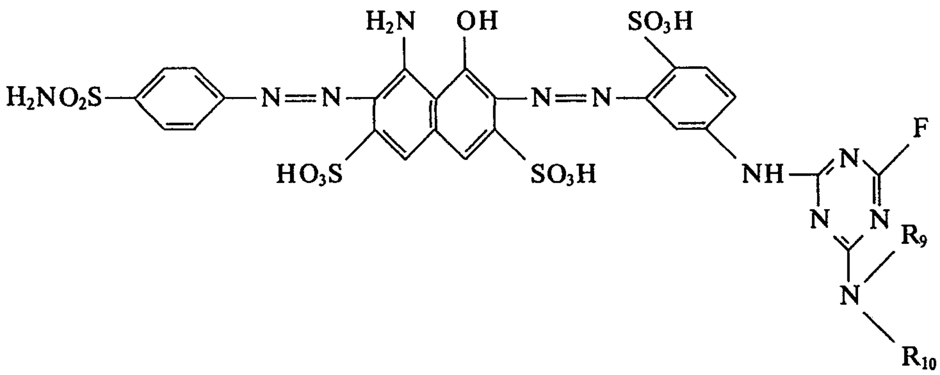

(2a)

worin $R_9$ und $R_{10}$ die in Anspruch 4) angegebene Bedeutung besitzen.

6. Verfahren zur Herstellung von Reaktivfarbstoffen der Formel (1) des Anspruchs 1, in welcher die Substituenten A, X, Y, Z und $R_1$ die dort angegebene Bedeutung besitzen, dadurch gekennzeichnet, daß man eine Kupplungskomponente der Formel

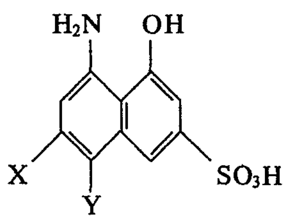

(3)

eine Diazokomponente der Formel

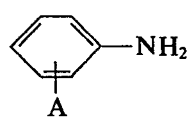

(4)

eine weitere Diazokomponente der Formel

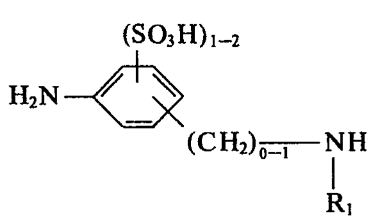

(5)

2,4,6-Trifluor-s-triazin

und eine Aminoverbindung der Formel

H—Z (6)

in beliebiger Folge diazotiert, kuppelt und kondensiert.

7. Verwendung von Reaktivfarbstoffen gemäß Anspruch 1) bis 5) zum Färben und Bedrucken von hydroxylgruppen- oder stickstoffhaltigem Material.

8. Mit Farbstoffen gemäß Anspruch 1) bis 5) gefärbtes oder bedrucktes hydroxylgruppen- oder stickstoffhaltiges Gewebe.

## Claims

1. Reactive dyestuffs of the formula

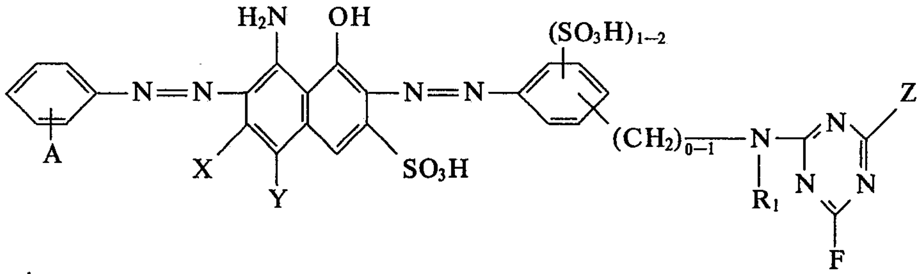

(1)

wherein

A = a radical of the series comprising nitro,

$SO_2R_2$ 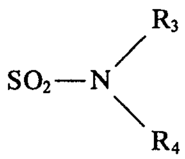 und Cl

wherein

$R_2$ = ($C_1$—$C_6$)-alkyl optionally substituted by OH, ($C_1$—$C_4$)-alkoxy, $SO_3H$, $OSO_3H$, Cl, CN, COOH or $C_2$—$C_6$-alkenyl or phenyl optionally substituted by sulpho groups and wherein

$R_3$ and $R_4$ are identical and/or different and represent hydrogen, alkyl($C_1$—$C_6$) optionally substituted by OH, $SO_3H$, Cl, CN, COOH, alkoxy-($C_1$—$C_4$) or halogen or phenyl optionally substituted by sulpho groups or wherein

$R_3$ and $R_4$ together with the nitrogen atom embraced by them, form a saturated 5- or 6-membered ring, if appropriate with inclusion of a further hetero-atom,

X and Y differ from each other and represent hydrogen or the sulpho group,

$R_1$ = hydrogen or alkyl($C_1$—$C_4$) and

Z = an optionally substituted amino group.

2. Reactive dyestuffs of the formula

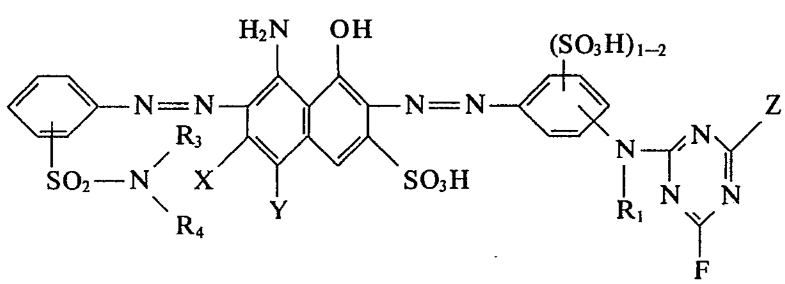

(1a)

wherein $R_1$, $R_3$, $R_4$, X, Y and Z have the meaning indicated in Claim 1.

3. Reactive dyestuffs of the formula

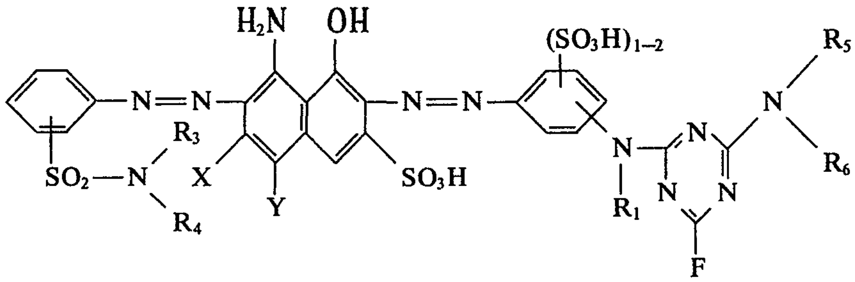

(1b)

wherein

$R_1$, $R_3$, $R_4$,
X and Y have the meaning indicated in Claim 1
$R_5$ = hydrogen or optionally substituted alkyl($C_1$—$C_4$), and
$R_6$ = hydrogen or optionally substituted alkyl, cycloalkyl, aralkyl or aryl.

4. Reactive dyestuffs of the formula

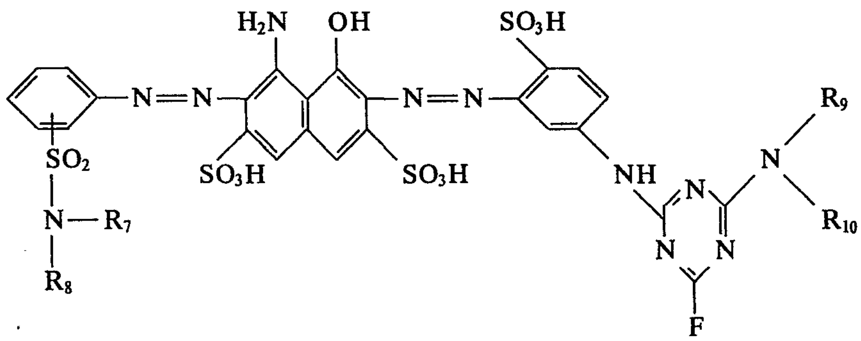

(2)

wherein

$R_7$ and $R_8$ are identical or different and represent hydrogen, methyl, ethyl or $\beta$-hydroxyethyl,
$R_9$ = hydrogen, methyl, ethyl or hydroxyethyl and
$R_{10}$ = hydrogen or phenyl optionally substituted by methyl, methoxy, chlorine or $SO_3H$.

5. Reactive dyestuffs of the formula

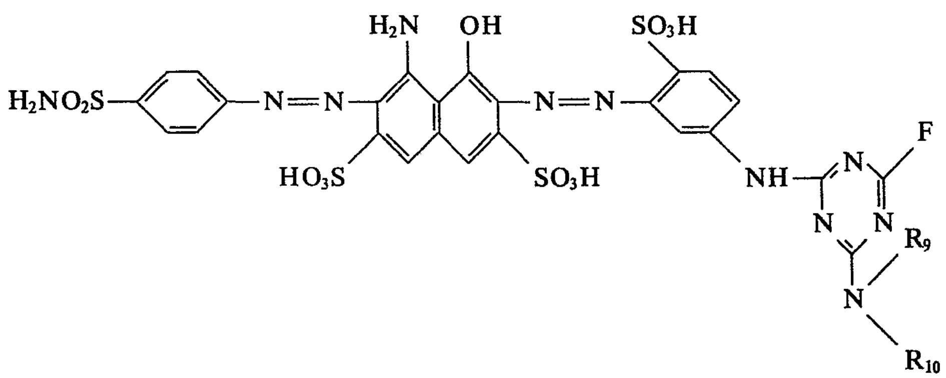

(2a)

wherein $R_9$ and $R_{10}$ have the meaning indicated in Claim 4).

6. Process for preparing reactive dyestuffs of the formula (1), of Claim 1, in which the substituents A, X, Y, Z and $R_1$ have the meaning indicated there, characterised in that a coupling component of the formula

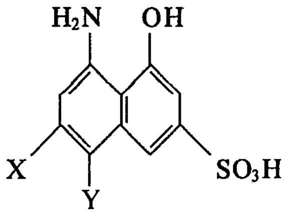

(3)

a diazo component of the formula

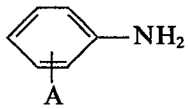

(4)

a further diazo component of the formula

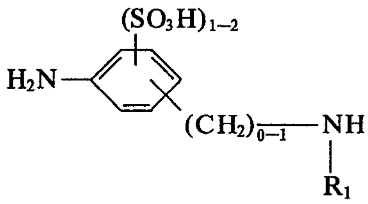

(5)

2,4,6-trifluoro-s-triazine and an amino compound of the formula

$$H—Z \qquad (6)$$

are diazotized, coupled and condensed in any order.

7. Use of reactive dyestuffs according to Claim 1) to 5) for dyeing and printing hydroxyl-group- or nitrogen-containing materials.

8. Hydroxyl-group- or nitrogen-containing fabric dyed or printed with dyestuffs according to Claim 1) to 5).

**Revendications**

1. Colorants réactifs de formule

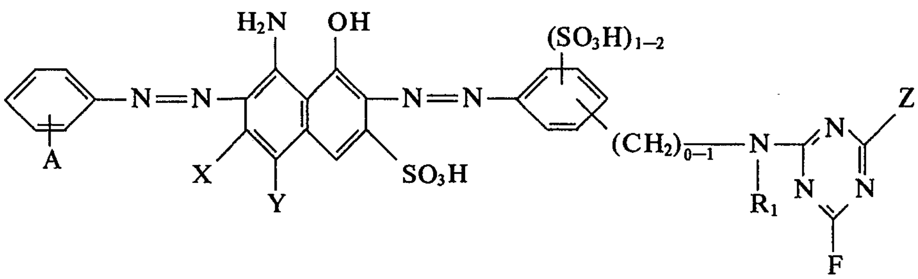

(1)

dans laquelle

A est un reste de la série nitro,

$SO_2R_2$ 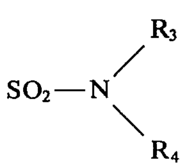 et Cl

où $R_2$ est un alkyle en $C_1$—$C_6$ éventuellement substitué par OH, alcoxy en $C_1$—$C_4$, $OSO_3H$, $SO_3H$, Cl, CN, COOH, alcényle en $C_2$—$C_6$, ou phényle éventuellement substitué par des groupes sulfo, et

où $R_3$ et $R_4$ sont identiques ou différents et représentent l'hydrogène, un groupe alkyle en $C_1$—$C_6$ éventuellement substitué par OH, $SO_3H$, Cl, CN, COOH, alcoxy en $C_1$—$C_4$,

halogéno, ou un groupe phényle éventuellement substitué par des groupes sulfo, ou bien
où $R_3$ et $R_4$ forment ensemble avec l'atome d'azote auquel ils sont liés, éventuellement avec un autre hétéroatome, un noyau saturé à 5 ou 6 chaînons,

X et Y sont différents et représentent l'hydrogène ou le groupe sulfo,
$R_1$ est l'hydrogène ou un groupe alkyle en $C_1$—$C_4$ et
Z est un groupe amino éventuellement substitué.

2. Colorants réactifs de formule

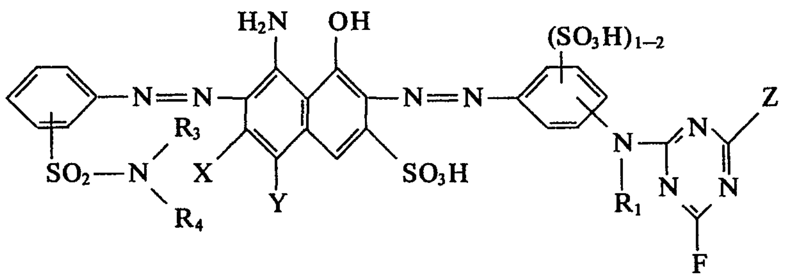

(1a)

dans laquelle $R_1$, $R_3$, $R_4$, X, Y et Z ont la signification indiquée à la revendication 1.

3. Colorants réactifs de formule

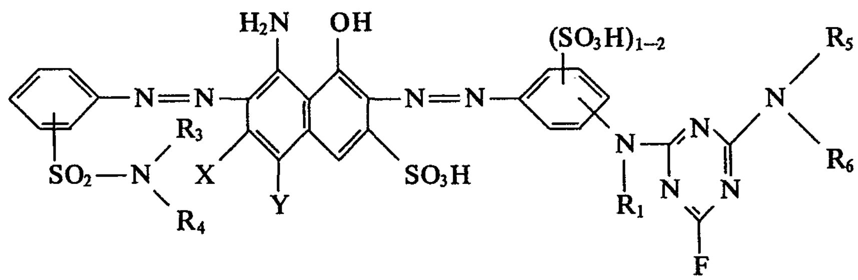

(1b)

dans laquelle

$R_1$, $R_3$, $R_4$,
X et Y ont la signification indiquée à la revendication 1,
$R_5$ est l'hydrogène ou un groupe en $C_1$—$C_4$ éventuellement substitué,
$R_6$ est l'hydrogène ou un groupe alkyle, cycloalkyle, aralkyle ou aryle éventuellement substitué.

4. Colorants réactifs de formule

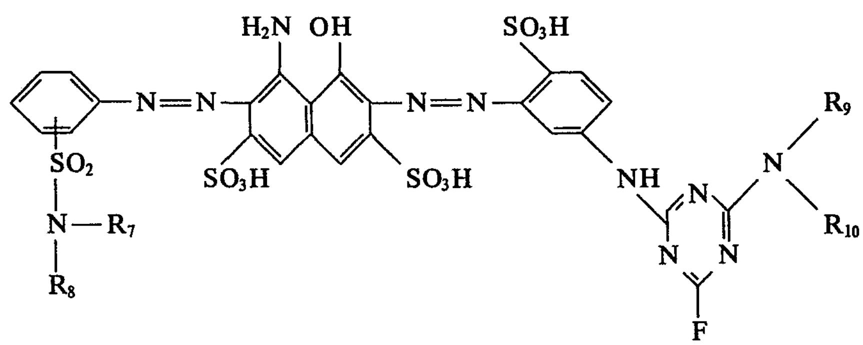

(2)

dans laquelle

$R_7$ et $R_8$ sont l'hydrogène, méthyle, éthyle ou $\beta$-hydroxyéthyle;
$R_9$ est l'hydrogène, méthyle, éthyle ou hydroxyéthyle et
$R_{10}$ est l'hydrogène ou phényle, qui peut être substitué par méthyle, méthoxy, chloro et sulfo.

5. Colorants réactifs de formule

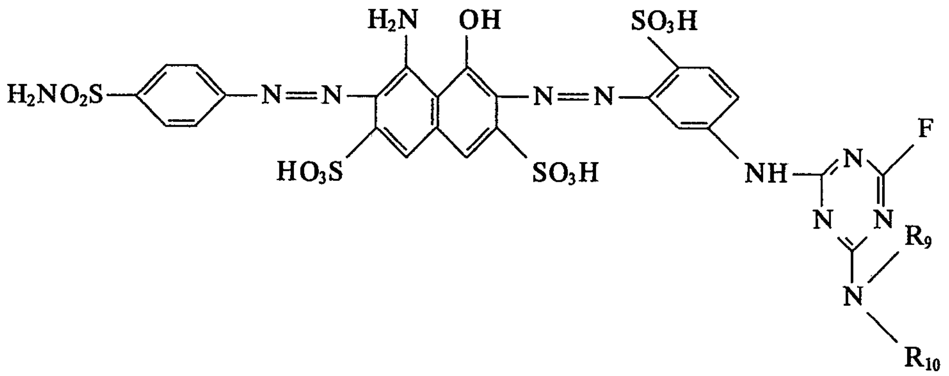

(2a)

6. Procédé pour la fabrication des colorants réactifs de formule (1) selon la revendication 1, dans laquelle les substituants A, X, Y, Z et $R_1$ ont la signification indiquée, caractérisé en ce que l'on diazote, on copule et on condense, dans un ordre quelconque, un composant de copulation de formule

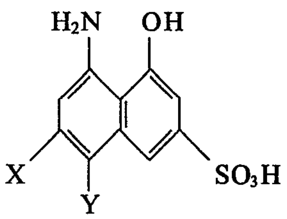

(3)

un composant diazoïque de formule

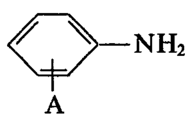

(4)

un autre composant diazoïque de formule

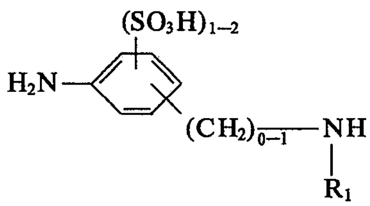

(5)

la 2,4,6-trifluoro-s-triazine

et un composé amino de formule

$$H—Z \qquad (6)$$

7. Utilisation de colorants réactifs selon les revendications 1 à 5 pour la teinture et l'impression d'un matériau à groupes hydroxyle ou azoté.

8. Matériau à groupes hydroxyle ou azoté teint ou imprimé par des colorants selon les revendications 1 à 5.